# EUROPEAN PATENT SPECIFICATION

(11) **EP 4 393 354 B1**
(45) Date of publication and mention of the grant of the patent: **08.10.2025**
(21) Application number: 23220158.2
(22) Date of filing: 22.12.2023
(51) Int. Cl.: A47J 27/21

(54) **A COFFEE MAKER COMPRISING A CONNECTOR GROUP**
KAFFEEMASCHINE MIT EINER VERBINDERGRUPPE
MACHINE À CAFÉ COMPRENANT UN GROUPE DE CONNECTEURS

(30) Priority: 29.12.2022 TR 202221448
(43) Date of publication of application: 03.07.2024
(73) Proprietor: Arçelik Anonim Sirketi, 34445 Istanbul (TR)
(72) Inventor: BEDIR, ERSIN, 34445 ISTANBUL (TR); KARAPINAR, UGUR, 34445 ISTANBUL (TR); KALIN, SEDAT, 34445 ISTANBUL (TR); EFELEROGLU, MEHMET, 34445 ISTANBUL (TR); KAYA, FAZIL ERDEM, 34445 ISTANBUL (TR)

(56) References cited:
- WO-A1-2008/012506
- WO-A1-2015/102553

## Description

The present invention relates to a coffee maker with improved safety.

In automatic coffee makers used for preparing Turkish coffee with the traditional taste, optionally adjusted amounts of ground coffee, sugar and cold water are placed in the brewing pot, and the resulting mixture is cooked with a heater. In order to obtain the traditional taste and consistency of Turkish coffee, it is necessary to control the rise of the foam before it reaches the full boiling point. In cases of possible overflow, the sealing in the device becomes important.

Heater connectors are used in the coffee makers similar to those used in electric kettles. Said heater connector is expected to be liquid-proof according to the current sealing standard. In the tests performed, if sufficient sealing is not ensured, liquid reaches the connector terminal ends and therefore undesirable situations such as arcing between the terminals and combustion may occur.

In the state of the art, there are guides around the connector and at the base thereof for sealing, and structures which partially collect the overflowing liquid and, if necessary, accumulate the same under the device. However, said structures cannot provide sufficient results and the desired removal of unwanted fluid cannot be achieved. Moreover, in case of possible overflow, if the liquid planned to be delivered to under the device and the surface in contact with the liquid flowing through the device are very close to each other, the connection between these liquids remains. Thus, with the effect of cohesion, a connection is formed between the water filtered from the product and the floor, thus preserving the conductivity. In the state of the art Turkish Patent Application No. TR 2016/02964, a coffee maker is disclosed, which detects the completion of the brewing of the coffee and terminates the process, and which prevents overflow.

A coffee maker comprising the features of the preamble of claim 1 is known from WO 2015/102553 A1.

The aim of the present invention is the realization of a coffee maker having a connector group which is improved against leakage and which has increased security.

The coffee maker of the present invention comprises a brewing pot which has lateral surfaces and wherein the brewing process is performed; a brewing chamber wherein the brewing pot is placed; a heater which provides the heating of the brewing pot; a connector group which is disposed at the bottom of the brewing chamber and which is suitable for providing electrical connection with the brewing pot; and a control unit which controls the brewing process. The coffee maker of the present invention comprises a connector group having an upper connector part which is positioned in the brewing chamber and which contain terminal ends therein and a lower connector part to which the upper connector part is connected, a terminal protrusion which is disposed between each two terminal ends, and an opposite protrusion which is provided on the lower connector part and which bears against each terminal protrusion in an aligned manner. Thus, even if the liquid passes into the terminal area, it cannot form a connection between the terminals.

In an embodiment of the present invention, the lower connector part comprises a flow guiding surface which corresponds to each terminal end and which is guided so as to be inclined towards the connector group base. Thus, even if the overflowing liquid passes into the terminal area, it cannot form a connection between the terminals, and by means of said inclined surface, the liquid is quickly removed from the terminals. Said flow guiding surface extends across a portion of the lower connector part so as to correspond to each terminal end and have the same inclination angle.

In an embodiment of the present invention, the lower connector part comprises the flow guiding surface which is inclined with an angle between 20° and 60° relative to the cross-section of the connector group. By means of said angle, the possible liquid reaching the terminals is enabled to be quickly removed. Moreover, said inclined surface prevents the water from accumulating and extends towards the base so as to be at a distance from the terminal end. This allows the liquid to reach the terminal end by splattering at most , and even in this case, the inclined surface ensures that the liquid flows to the base.

In an embodiment of the present invention, the lower connector part comprises an opening which is formed at the base of the inner part so as to allow liquid flow. Said opening is configured larger than the inner diameter of the lower connector part and allows the guided liquid to exit easily.

In an embodiment of the present invention, the lower connector part comprises an inner guiding fin which is inclined towards the connector group base at the inner part so as to guide a liquid leak into the opening. Moreover, said inner guiding fin comprises a first arm which contacts the upper connector part and a second arm which extends towards the circumferential wall of the lower connector part as an extension of said first arm. By means of the inner guiding fin which is largely configured to have an "L" section, the liquid coming from the upper connector part is guided inside the inner part.

In an embodiment of the present invention, the coffee maker comprises the connector group comprising the inner guiding fin having the first arm and the second arm with an inclination angle from 100° to 150° therebetween. By means of the angle between said arms, the liquid first flows quickly from the first arm to the second arm, and then slows down and flows into the opening. Thus, in case of possible overflow, unwanted liquid is transferred out of the device in an easy manner.

In an embodiment of the present invention, the coffee maker comprises the inner guiding wing wherein the first distance of the open end of the first arm to the connector base is 1/3 to 2/3 of the second distance of the open end of the first arm to the coffee maker seating base. By means of said ratio, it is ensured that the liquid which is guided to the opening and which may be present in the opening and the liquid flowing from the open end of the first arm are at different levels so as not to form a connection with each other.

In an embodiment of the present invention, the coffee maker comprises the lower connector part comprising an opening which is formed at the connector base of the lower connector part and which has a diameter larger than the inner diameter of the lower connector part. By means of the expansion of said diameter, a structure is achieved wherein the liquid flowing from the lateral walls is also guided towards the opening. In an embodiment of the present invention, the lower connector part can be integral with the connector group base such that the lower connector structure and the base suitable for the upper connector part are manufactured together with the production of only a single component. On the connector group base, there are a plurality of recesses and protrusions which provide durability and accumulation of any possible liquid leakage therein.

The coffee maker realized in order to attain the aim of the present invention is illustrated in the attached figures, where:
Figure 1 - is the perspective view of the coffee maker related to an embodiment of the present invention.
Figure 2 - is the perspective view of the coffee maker shown in Figure 1 when the brewing pot is removed.
Figure 3 - is the perspective view of the connector group suitable to be used in the coffee maker related to an embodiment of the present invention.
Figure 4 - is the front view of the connector group shown in Figure 3.
Figure 5 - is the cross-sectional view of the connector group provided at the base of the coffee maker related to an embodiment of the present invention.
Figure 6 - is the partial cross-sectional perspective view showing the inner part of the connector group shown in Figure 3.
Figure 7 - is the view of the connector group shown in Figure 6 from a different angle.

The elements illustrated in the figures are numbered as follows:
- 1.: Coffee maker
11. Brewing chamber
12. Coffee maker seating base
- 2.: Cable group
- 3.: Brewing pot
31. Handle
- 4.: Body
- 5.: Measuring spoon
- 6.: Connector group
61. Connector group base
62. Lower connector part
621. Flow guiding surface
622. Inner part
623. Circumferential wall
624. Opposite protrusion
625. Skirt
626. Inner guiding fin
6261. First arm
6262. Second arm
6263. Open end part
627. Connector base
63. Upper connector part
631. Upper surface
632. Terminal end
633. Terminal protrusion
- h1.: First height
- h2.: Second height
- Y: Transverse cross-section of the connector group
- α: Inclination angle

The coffee maker (1) comprises a brewing pot (3) which has lateral surfaces and wherein the brewing process is performed; a brewing chamber (11) wherein the brewing pot (3) is placed; a heater which provides the heating of the brewing pot (3); a connector group (6) which is disposed at the bottom of the brewing chamber (11) and which is suitable for providing electrical connection with the brewing pot (3); and a control unit which controls the brewing process. Additional ingredients such as coffee and sugar placed in the brewing pot (3) are brewed by the heater with the water added depending on the amount of coffee desired to be brewed. On the brewing pot (3), there is an opposite connector receiver part which matches the connector group (6), and the necessary energy is supplied to the brewing pot (3) with the energy coming from the cable group (2) comprising the electrical cable.

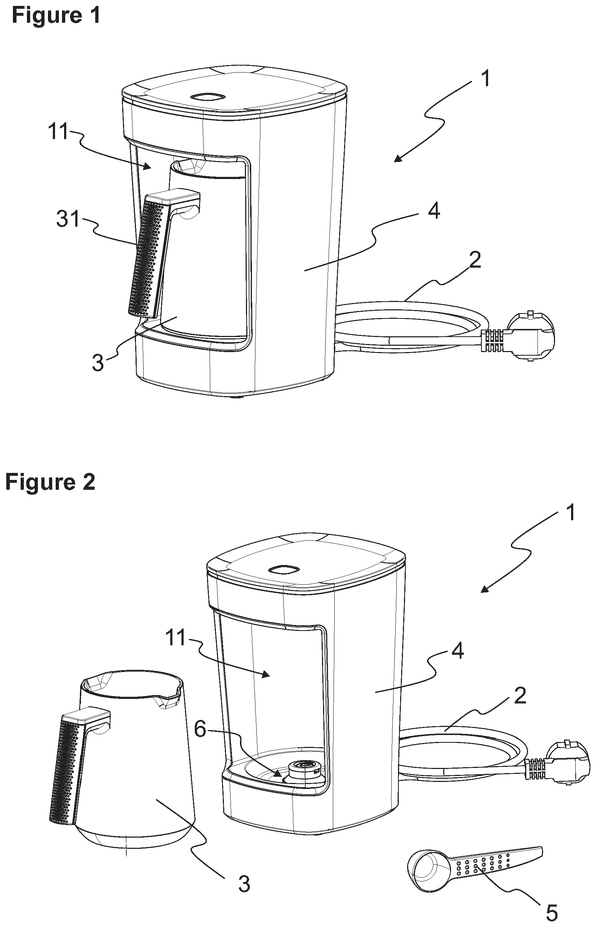

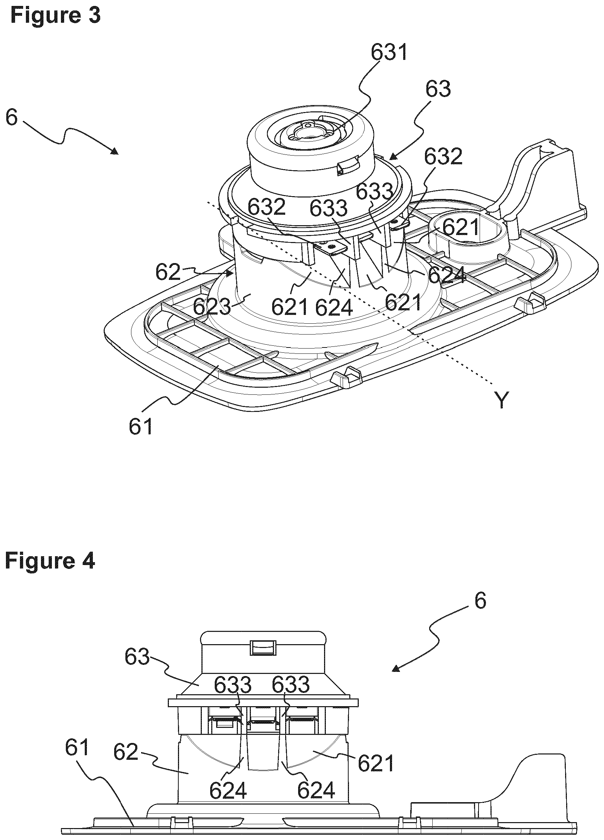

As shown in Figure 1 and 2, the coffee maker (1) of the present invention comprises an upper connector part (63) which is disposed in the brewing chamber (11) and which has terminal ends (632) therein, and a lower connector part (62) to which the upper connector part (63) is connected. Referring to Figure 3, the connector group (6) has a terminal protrusion (633) which is disposed between each two terminal ends (632) and an opposite protrusion (624) which bears against each terminal end (633) in an aligned manner on the lower connector part (62). Thus, the possible connection between the terminal ends (632) in case of a possible leakage is prevented. **In** case of a possible overflow or unwanted liquid flow, said liquid is guided internally before reaching the terminal area. Even in case of liquid reaching the terminal area, the connection between the liquids and the terminals are prevented by means of the opposite protrusions (624) bearing against each terminal protrusion (633) in an aligned manner. Thus, a coffee maker (1) with improved safety is realized. The opposite protrusions (624) have substantially the same wall thickness as the terminal protrusions (633) and have a flat upper surface which bears against the terminal protrusions (633).

As shown in Figure 2, the brewing pot (3) comprises a pouring spout which is suitable for pouring the beverage therein after the completion of the brewing process, and a handle (31) which enables the user to hold the brewing pot (3). The coffee maker (1) further comprises a measuring spoon (5) which indicates the amount of coffee-like extract to be placed in the brewing pot (3) and which enables the same to be easily placed into the brewing pot (3). **In** the coffee maker (1), there are sensors which detect whether the coffee is foaming or not as well as a control card which cuts off the electricity to the heater after detection of the completion of the brewing of the coffee. Moreover, in an embodiment of the present invention, there may be additional sensors to inform the user audibly and visually.

The coffee maker (1) of the present invention comprises a flow guiding surface (621) which corresponds to each terminal end (632) and which is guided so as to be inclined towards the connector group base (61). Said flow guiding surface (621) is formed on the lower connector part (62). As shown in Figure 3, the flow guiding surface (621) having the opposite protrusions (624) thereon is configured to be inclined at an angle between 20° and 60° relative to the cross-section (Y) of the connector group (6). In an embodiment of the present invention, said flow guiding surface (621) is inclined at an angle of approximately 45°. Thus, the liquid which may reach the terminal ends (632) is also guided towards the connector group base (61).

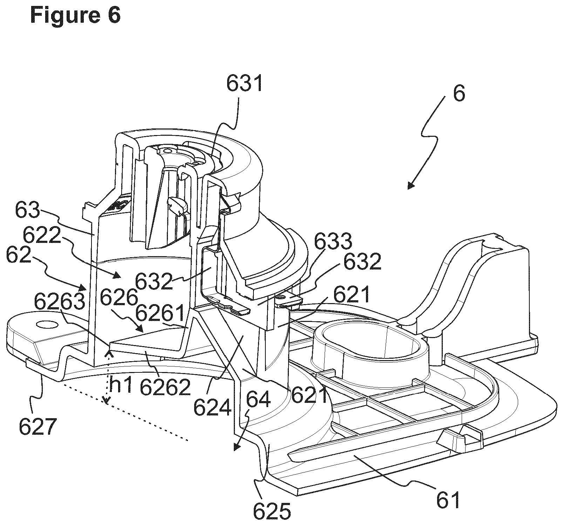

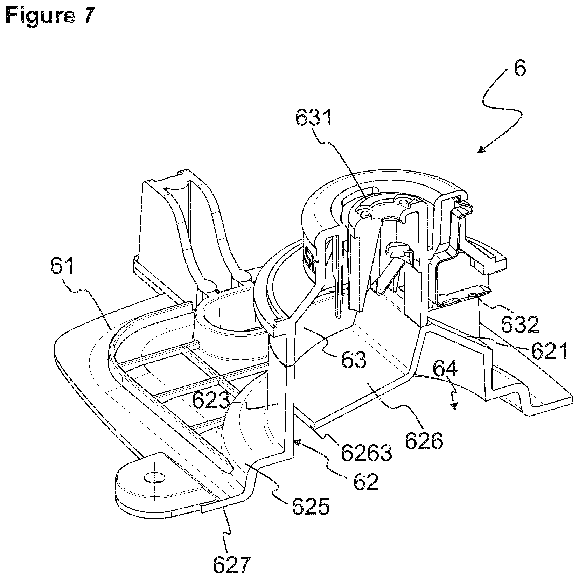

In an embodiment of the present invention, the lower connector part (62) comprises an opening (64) which is formed at the base of the inner part (622) so as to allow liquid flow. As shown in Figures 6 and 7, by means of the opening (64) having a larger diameter, the liquid guided into the connector group (6) is enabled to reach said opening (64) and be discharged out of the coffee maker (1). By configuring said opening (64) as wide as possible, problems such as clogging of the liquid flow in the smaller holes on the base are prevented.

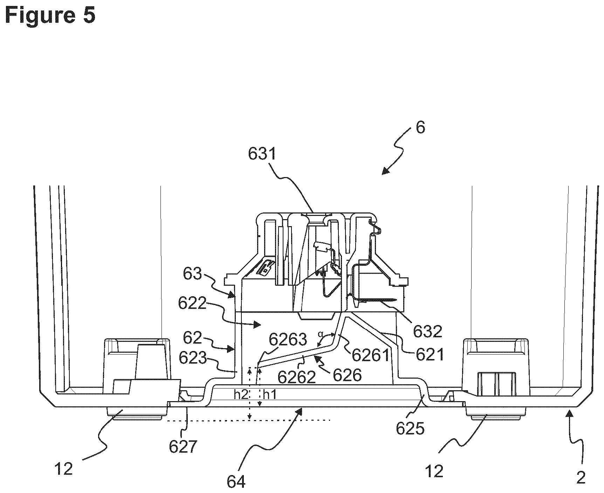

In an embodiment of the present invention, the lower connector part (62) comprises an inner guiding fin (626) which is inclined towards the connector group base (61) at the inner part (622) so as to guide a liquid leak into the opening (64). Said inner guiding fin (626) extends in the lower connector part (62) and is inclined towards the opening (64). By means of the flow of the liquid, which may come from the upper surface (631) in the upper connector part (63), on said inner guiding fin (626), said liquid is enabled to flow quickly and safely to the opening (64). In an embodiment of the present invention, the inner guiding fin (626) comprises a first arm (6261) which contacts the upper connector part (63) and a second arm (6262) which extends towards the circumferential wall (623) forming the outer wall of the lower connector part (62) as an extension of said first arm (6261). As shown in Figures 6 and 7, the first arm (6261) bears against the upper connector part (63) and extends downwards towards the opening (64) with a slight inclination close to the vertical direction. Here, the second arm (6262) extends at an angle greater than 90°. There is an inclination angle (α), preferably from 100° to 150°, between the first arm (6261) and the second arm (6262). Said inclination angle (α) and the height of the first arm (6261) are used to adjust the distance of the open end part (6263) of the first arm (6261) to the connector base (627). Referring to Figure 5, the first distance (h1) of the open end part (6263) of the first arm (6261) to the connector base (627) is selected to be between 1/3 and 2/3 of the second distance (h2) of the open end part (6263) of the first arm (6261) to the coffee maker seating base (12). The critical point here is that the first distance (h1) should not be selected to be too close to the second distance (h2). Thus, the liquid guided by the inner guiding wing (626) is prevented from forming a connection after flowing into the opening (64). In case of a possible overflow, the liquid may accumulate in the opening (64), and by means of said specified distance, the liquid flowing last from the open end part (6263) is prevented from forming a connection with said accumulated liquid. Thus, a coffee maker (1) with improved safety is realized. Referring to Figure 5, the part referred to as the coffee maker seating base (12) is the base part placed at the corners in contact with the surface whereon the coffee maker (1) is placed. In an alternative embodiment of the present invention, the height and form of the feet may change, or a flat base without any feet may be used.

As shown in Figure 5, in an embodiment of the present invention, the lower connector part (62) comprises an opening (64) which is formed at the connector base (627) and which has a diameter larger than the inner diameter of the lower connector part (62). By means of the larger diameter of said opening (64), clogging after possible accumulation of liquid is prevented. The part with a larger diameter is a skirt (625) which is an extension of the lower connector part (62) and which then joins with the connector group base (61).

As shown in Figure 3, in an embodiment of the present invention, the lower connector part (62) is a monolithic piece which is an extension of the connector group base (61). Thus, the production process is shortened and the production cost is also decreased. Moreover, there are a number of recessed parts which have the same cross-section on the connector group base (61). Said recesses also provide a more solid base structure.

## Claims

1. A coffee maker (1) **comprising** a brewing pot (3) which has lateral surfaces and wherein the brewing process is performed; a brewing chamber (11) wherein the brewing pot (3) is placed; a heater which provides the heating of the brewing pot (3); a connector group (6) which is disposed at the bottom of the brewing chamber (11) and which is suitable for providing electrical connection with the brewing pot (3); and a control unit which controls the brewing process, **characterized by** the connector group (6) having
- an upper connector part (63) which is disposed in the brewing chamber (11) and which has terminal ends (632) therein, and a lower connector part (62) to which the upper connector part (63) is connected;
- a terminal protrusion (633) which is disposed between each two terminal ends (632); and
- an opposite protrusion (624) which bears against each terminal end (633) in an aligned manner on the lower connector part (62).

2. A coffee maker (1) as in Claim 1, **characterized by** the lower connector part (62) comprising a flow guiding surface (621) which corresponds to each terminal end (632) and which is guided so as to be inclined towards the connector group base (61).

3. A coffee maker (1) as in Claim 2, **characterized by** the lower connector part (62) comprising the flow guiding surface (621) which is inclined with an angle between 20° and 60° relative to the cross-section (Y) of the connector group (6).

4. A coffee maker (1) as in any one of the above claims, **characterized by** the lower connector part (62) comprising an opening (64) which is formed at the connector base (627) where the inner part (622) extends so as to allow liquid flow.

5. A coffee maker (1) as in Claim 4, **characterized by** the lower connector part (62) comprising an inner guiding fin (626) which is inclined towards the connector group base (61) at the inner part (622) so as to guide a liquid leak into the opening (64).

6. A coffee maker (1) as in Claim 5, **characterized by** the connector group (6) having the inner guiding fin (626) comprising a first arm (6261) which contacts the upper connector part (63) and a second arm (6262) which extends towards the circumferential wall (623) of the lower connector part (62) as an extension of said first arm (6261).

7. A coffee maker (1) as in Claim 6, **characterized by** the connector group (6) comprising the inner guiding fin (626) having the first arm (6261) and the second arm (6262) with an inclination angle from 100° to 150° therebetween.

8. A coffee maker (1) as in any one of the above claims, **characterized by** the inner guiding fin (626) wherein the first distance (h1) of the open end part (6263) of the first arm (6261) to the connector base (627) is selected to be between 1/3 and 2/3 of the second distance (h2) of the open end part (6263) of the first arm (6261) to the coffee maker seating base (12).

9. A coffee maker (1) as in any one of the above claims, **characterized by** the lower connector part (62) comprising an opening (64) which is formed at the connector base (627) of the lower connector part (62) and which has a diameter larger than the inner diameter of the lower connector part (62).

10. A coffee maker (1) as in any one of the above claims, **characterized by** the connector group (6) wherein the lower connector part (62) is a monolithic piece which is an extension of the connector group base (61).

## Patentansprüche

1. Eine Kaffeemaschine (1) umfasst eine Brühkanne (3), die Seitenflächen aufweist und in der der Brühvorgang durchgeführt wird; eine Brühkammer (11), in der die Brühkanne (3) platziert ist; eine Heizvorrichtung, die für die Erwärmung der Brühkanne (3) sorgt; eine Verbindungsgruppe (6), die am Boden der Brühkammer (11) angeordnet ist und die geeignet ist, eine elektrische Verbindung mit der Brühkanne (3) herzustellen; und eine Steuereinheit, die den Brühvorgang steuert, **gekennzeichnet ist sie dadurch,** dass die Verbindungsgruppe (6) folgendes aufweist
- ein oberes Verbindungsteil (63), das in der Brühkammer (11) angeordnet ist und das Anschlussenden (632) darin aufweist, und ein unteres Verbindungsteil (62), mit dem das obere Verbindungsteil (63) verbunden ist;
- einen Anschlussvorsprung (633), der zwischen jedem der beiden Anschlussenden (632) angeordnet ist; und
- einen gegenüberliegenden Vorsprung (624), der gegen jedes Anschlussende (633) in einer ausgerichteten Weise an dem unteren Verbinderteil (62) anliegt.

2. Eine Kaffeemaschine (1) wie in Anspruch 1 aufgeführt, **ist dadurch gekennzeichnet, dass** das untere Verbinderteil (62) eine Strömungsführungsfläche (621) umfasst, die jedem Anschlussende (632) entspricht und die so geführt wird, dass sie in Richtung der Verbindergruppenbasis (61) geneigt ist.

3. Eine Kaffeemaschine (1) wie in Anspruch 2 aufgeführt, **ist dadurch gekennzeichnet, dass** der untere Verbinderteil (62) die Strömungsleitfläche (621) umfasst, die in einem Winkel zwischen 20° und 60° relativ zum Querschnitt (Y) der Verbindergruppe (6) geneigt ist.

4. Eine Kaffeemaschine (1) wie in einem der vorherigen Ansprüchen aufgeführt, **ist dadurch gekennzeichnet, dass** der untere Verbinderteil (62) eine Öffnung (64) aufweist, die an der Verbinderbasis (627) ausgebildet ist, wo sich der innere Teil (622) erstreckt, um einen Flüssigkeitsstrom zu ermöglichen.

5. Eine Kaffeemaschine (1) wie in Anspruch 4 aufgeführt, **ist dadurch gekennzeichnet, dass** der untere Verbinderteil (62) eine innere Führungsrippe (626) aufweist, die am inneren Teil (622) zur Verbindergruppenbasis (61) hin geneigt ist, um ein Ausströmen von Flüssigkeit in die Öffnung (64) zu leiten.

6. Eine Kaffeemaschine (1) wie in Anspruch 5 aufgeführt, **ist dadurch gekennzeichnet, dass** die Verbindergruppe (6) mit der inneren Führungsrippe (626) einen ersten Arm (6261), der den oberen Verbinderteil (63) berührt, und einen zweiten Arm (6262) umfasst, der sich in Richtung der Umfangswand (623) des unteren Verbinderteils (62) als eine Verlängerung des ersten Arms (6261) erstreckt.

7. Eine Kaffeemaschine (1) wie in Anspruch 6 aufgeführt, **ist dadurch gekennzeichnet, dass** die Verbindergruppe (6) die innere Führungsrippe (626) mit dem ersten Arm (6261) und dem zweiten Arm (6262) mit einem Neigungswinkel von 100° bis 150° dazwischen umfasst.

8. Eine Kaffeemaschine (1) wie in einem der vorherigen Ansprüchen aufgeführt, **ist dadurch gekennzeichnet, dass** die innere Führungsrippe (626), wobei der erste Abstand (h1) des offenen Endteils (6263) des ersten Arms (6261) zu der Verbindungsbasis (627) so gewählt ist, dass er zwischen 1/3 und 2/3 des zweiten Abstands (h2) des offenen Endteils (6263) des ersten Arms (6261) zu der Kaffeemaschinen-Sitzbasis (12) liegt.

9. Eine Kaffeemaschine (1) wie in einem der vorherigen Ansprüchen aufgeführt, **ist dadurch gekennzeichnet, dass** das untere Verbinderteil (62) eine Öffnung (64) aufweist, die an der Verbindungsbasis (627) des unteren Verbinderteils (62) ausgebildet ist und die einen Durchmesser aufweist, der größer ist als der Innendurchmesser des unteren Verbinderteils (62).

10. Eine Kaffeemaschine (1) wie in einem der vorherigen Ansprüchen aufgeführt, **ist dadurch gekennzeichnet, dass** die Verbindergruppe (6), bei der das untere Verbinderteil (62) ein monolithisches Stück ist, das eine Verlängerung der Verbindergruppenbasis (61) ist.

## Revendications

1. Une cafetière (1) **comprenant** un pot d'infusion (3) qui a des surfaces latérales et dans lequel le processus d'infusion est réalisé ; une chambre d'infusion (11) dans laquelle est placé le pot d'infusion (3) ; un élément chauffant qui assure le chauffage du pot d'infusion (3) ; un groupe de connecteurs (6) qui est disposé au fond de la chambre d'infusion (11) et qui est adapté pour assurer une connexion électrique avec le pot d'infusion (3) ; et une unité de commande qui contrôle le processus d'infusion, **caractérisée par** le groupe de connecteurs (6) comprenant :
- une partie supérieure du connecteur (63) qui est disposée dans la chambre d'infusion (11) et qui a des bornes terminales (632) à l'intérieur, et une partie inférieure du connecteur (62) à laquelle est reliée la partie supérieure du connecteur (63) ;
- une saillie terminale (633) qui est disposée entre chaque paire de bornes terminales (632) ; et
- une saillie opposée (624) qui s'appuie de manière alignée contre chaque saillie terminale (633), sur la partie inférieure du connecteur (62).

2. Une cafetière (1) selon la Revendication 1, **caractérisée par** la partie inférieure du connecteur (62) comprenant une surface de guidage du flux (621) qui correspond à chaque borne terminale (632) et qui est orientée de manière inclinée vers la base du groupe de connecteurs (61).

3. Une cafetière (1) Une cafetière (1) selon la Revendication 2, **caractérisée par** la partie inférieure du connecteur (62) comprenant une surface de guidage du flux (621) qui est inclinée selon un angle compris entre 20° et 60° par rapport à la section transversale (Y) du groupe de connecteurs (6).

4. Une cafetière (1) selon l'une quelconque des revendications précédentes, **caractérisée par** la partie inférieure du connecteur (62) comprenant une ouverture (64) qui est formée au niveau de la base du connecteur (627) où s'étend la partie interne (622), de manière à permettre l'écoulement d'un liquide.

5. Une cafetière (1) selon la Revendication 4, **caractérisée par** la partie inférieure du connecteur (62) comprenant une ailette de guidage interne (626) qui est inclinée vers la base du groupe de connecteurs (61), au niveau de la partie interne (622), de manière à guider une fuite de liquide vers l'ouverture (64).

6. Une cafetière (1) selon la Revendication 5, **caractérisée par** le groupe de connecteurs (6) ayant l'ailette de guidage interne (626) comportant un premier bras (6261) en contact avec la partie supérieure du connecteur (63), et un second bras (6262) qui s'étend vers la paroi circonférentielle (623) de la partie inférieure du connecteur (62) en prolongement dudit premier bras (6261).

7. Une cafetière (1) selon la Revendication 6, **caractérisée par** le groupe de connecteurs (6) comprenant l'ailette de guidage interne (626) ayant le premier bras (6261) et le second bras (6262) avec un angle d'inclinaison entre eux compris entre 100° et 150°.

8. Une cafetière (1) selon l'une quelconque des revendications précédentes, **caractérisée par** l'ailette de guidage interne (626) où la première distance (hl) entre la partie de l'extrémité ouverte (6263) du premier bras (6261) et la base du connecteur (627) est choisie pour être comprise entre 1/3 et 2/3 de la deuxième distance (h2) entre la partie de l'extrémité ouverte (6263) du premier bras (6261) et la base d'assise (12) de la cafetière.

9. Une cafetière (1) selon l'une quelconque des revendications précédentes, **caractérisée par** la partie inférieure du connecteur (62) comprenant une ouverture (64) qui est formée au niveau de la base du connecteur (627) de ladite partie inférieure du connecteur (62) et qui a un diamètre supérieur au diamètre intérieur de ladite partie inférieure du connecteur (62).

10. Une cafetière (1) selon l'une quelconque des revendications précédentes, **caractérisée par** le groupe de connecteurs (6) dans lequel la partie inférieure du connecteur (62) est une pièce monolithique qui constitue un prolongement de la base du groupe de connecteurs (61).
